# EUROPÄISCHE PATENTSCHRIFT

(11) **EP 4 427 852 B1**
(45) Veröffentlichungstag und Bekanntmachung des Hinweises auf die Patenterteilung: **17.06.2026**
(21) Anmeldenummer: 24160526.0
(22) Anmeldetag: 29.02.2024
(51) Int. Cl.: B07C 5/342

(54) **VERFAHREN UND VORRICHTUNG ZUM SORTIEREN UND/ODER BEHANDELN VON BEHÄLTNISSEN**
METHOD AND DEVICE FOR SORTING AND/OR TREATING CONTAINERS
PROCÉDÉ ET DISPOSITIF DE TRI ET/OU DE TRAITEMENT DE RÉCIPIENTS

(30) Priorität: 07.03.2023 DE 102023105672
(43) Veröffentlichungstag der Anmeldung: 11.09.2024
(73) Patentinhaber: Krones AG, 93073 Neutraubling (DE)
(72) Erfinder: Alsheikh, Ahmad, 93073 Neutraubling (DE); Albrecht, Thomas, 93073 Neutraubling (DE)
(74) Vertreter: Hannke Bittner & Partner mbB Regensburg

(56) Entgegenhaltungen:
- DE-A1- 102006 031 178
- DE-A1- 102021 114 156
- US-A1- 2023 062 938

## Beschreibung

Die vorliegende Erfindung bezieht sich auf ein Verfahren und eine Vorrichtung zum Sortieren von Objekten und insbesondere von Behältnissen und insbesondere von transportierten Behältnissen. Die Erfindung bezieht sich genauer auf das Gebiet der getränkeherstellenden Industrie, wobei hier bekannt ist, dass im Rahmen einer bestimmten Anlage verschiedene Sorten von Getränken hergestellt werden. Bei der Produktion unterschiedlicher Geschmacksrichtungen von Getränken wird heute darauf geachtet, die einzelnen Sorten nicht zu vermischen, um sie sortenrein einer Verpackungsmaschine zuführen zu können oder um sie sortenrein in ein Zwischenlager zu fahren, aus dem in einem nächsten Arbeitsschritt die einzelnen Sorten kommissionsspezifisch zusammengestellt werden.

Die Geschmacksrichtungen einzelner Getränkesorten sind über die farbliche Ausgestaltung der Behälter und/oder deren Verschlüsse zu identifizieren. Derzeit werden im Stand der Technik Farbsensoren verwendet, die wie eine Art fotoelektrischer Sensor arbeiten wobei das Licht von einem Sender ausstrahlt wird und dann das vom Zielobjekt, d. h. dem Behältnis zurückgeworfene Licht mit einem Empfänger erfasst wird.

Ein Farbsensor kann die empfangene Lichtintensität beispielsweise für die Farben rot, blau und grün erkennen, wodurch die Farbe des Zielobjekts bestimmt werden kann. Derartige Sensoren sind relativ teuer und wenig flexibel, da jeder Sensor die Farbe eines einzelnen Objekts erkennen kann und das Objekt der Zielfarbe zugewandt sein muss.

Daher muss bei einer Erhöhung der Anzahl der Transporteinrichtungen wie Förderbänder auch die Anzahl der Sensoren erhöht werden, um einen bestimmten Bereich der Bänder abzudecken. Daneben wird die Farbinformation der Behältnisse nach dem Durchlaufen des Sensorbereichs verloren gehen.

Durch den sequenziellen Transport verschiedener Geschmacksrichtungen und/oder Behältnisse und/oder Produkte auf Getränkeabfülllinien werden Puffer und Transportkapazitäten nicht optimal ausgenutzt bzw. wird die Erreichung eines sehr hohen Grades an Flexibilität erschwert. Die Kommissionierung gemischter Gebinde bedarf der Zwischenlagerung der einzelnen Sorten und deren kommissionsspezifische Auslagerung und Verpackung, was zu einem hohen technischen Aufwand führt und auch platz- und ressourcentechnisch ungünstig ist.

Die aktuellen Farbsensoren erkennen die Farbe eines einzelnen Objekts bzw. Behältnisses und geben diese Information bevorzugt an einen Aktor weiter. Diese Technologie ist jedoch auch in Bezug auf die Menge der zu erkennenden Farben begrenzt und es ist schwierig, die Sorte zu erkennen, wenn das Objekt Schriftzeichen oder andere visuelle Elemente enthält, welche die Farbintensität stören können. Weiterhin ist es ein Problem, wenn jeder Sensor auf die Erkennung einer einzigen Objektfarbe zur gleichen Zeit limitiert ist.

Aus der DE 10 2018 124 712 A1 ist ein Arbeitssystem und ein Verfahren zum Durchführen von Arbeit an einem Objekt und Roboter bekannt. Dabei ist ein optischer Sensor vorgesehen, der an einer sich bewegenden Plattform gesichert ist und der sukzessive optische Informationen über ein Objekt ausgibt.

Die EP 3 618 976 B1 beschreibt eine Vorrichtung und ein Verfahren zum Selektieren von mit hoher Geschwindigkeit bewegten Gebinden.

Aus der DE 10 2013 207 139 A1 sind ein Verfahren zur Überwachung und Steuerung einer Abfüllanlage und eine Vorrichtung zur Durchführung dieses Verfahrens bekannt. Dabei werden in einem Bereich einer Abfüllanlage Bildsequenzen aufgenommen und die Bildsequenzen werden durch Berechnung eines optischen Flusses aus einer Bildsequenz in einer vorgegebenen Anzahl von Einzelbildern ausgewertet.

Die DE 10 2016 211 910 A1 beschreibt eine Inspektionsvorrichtung in ein Inspektionsverfahren zur Inspektion von in einem Leergutkasten angeordneten Behältern. Dabei ist ein Kopf mit in mehreren Greiferreihen angeordneten Greifern vorgesehen, um die Behälter zu greifen und aus dem Leergutkasten herauszunehmen. Daneben ist ein optisches Inspektionssystem vorgesehen, zur Inspektion der mit den Greifern aus dem Leergutkasten herausgefahrenen Behältern.

Die EP 1 446 656 B1 beschreibt ein Verfahren und ein Gerät zum Erzeugen eines robusten Referenzbildes eines Behältnisses und zum Auswählen eines Behältnisses. Dabei wird eine Bildaufnahme eines Teils des Äußeren einer Vielzahl von Behältnissen aufgenommen und diese Bilder werden verarbeitet, um eine flache Darstellung zu erhalten, wobei die Bildinformationen relativ zu der Bildinformation in der Mitte der Aufnahme bis zu einem gewissen Grad in Richtung auf beide Seiten gestreckt wird. Anschließend wird die komplette Umfangsansicht über 360° des Äußeren eines Referenzbehältnisses zusammengesetzt.

Die US 2023/0062938 A1 beschreibt ein Verfahren zum Sortieren und/oder Behandeln von Behältnissen sowie eine korrespondierende Vorrichtung nach dem Oberbegriff der unabhängigen Patentansprüche.

Ausgehend von dem oben genannten Stand der Technik stellt sich die Aufgabe, den Durchsatz derartiger Anlagen und die Zuverlässigkeit des Sortiervorgangs zu verbessern. Daneben stellt sich dem Fachmann die Aufgabe, eine entsprechende Vorrichtung kostengünstiger zu gestalten.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Sortieren und/oder Behandeln von Behältnissen wird wenigstens ein Bild und/oder ein Video (und/oder eine Bildfolge bzw. eine Vielzahl von Bildern) einer Vielzahl von Behältnissen mittels einer Bildaufnahmeeinrichtung, welche zur Aufnahme ortsaufgelöster Farbbilder geeignet und bestimmt ist, aufgenommen. In einem weiteren Verfahrensschritt wird dieses aufgenommene Bild analysiert. Weiterhin werden innerhalb des Bildes Behältnisse identifiziert. Bevorzugt werden dabei diese Behältnisse auch individuell identifiziert, d. h. bevorzugt jedes einzelne Behältnis, welches von dem Bild oder der Bildaufnahmeeinrichtung aufgenommen wurde.

In einem weiteren Schritt werden eine Identifikationsinformation sowie wenigstens ein Abschnitt des aufgenommenen Bildes zu jedem der identifizierten Behältnisse zugeordnet.

In einem weiteren Schritt wird eine Farbinformation ermittelt, welche für ein identifiziertes Behältnis charakteristisch ist, wobei diese Farbinformation aus dem Abschnitt des aufgenommenen Bildes ermittelt wird.

Es wird daher ein mehrstufiges Verfahren vorgeschlagen. Zunächst wird ein Bild aufgenommen, wobei dieses Bild insbesondere eine Vielzahl von Behältnissen zeigt. Anschließend wird das Bild dahingehend analysiert, dass das Bild in Bildabschnitte, welche die einzelnen Behältnisse zeigen, unterteilt wird. Auf diese Weise werden auch die einzelnen Behältnisse identifiziert. Anschließend erfolgt die oben erwähnte Zuordnung zu dem Bildabschnitt und/oder dem identifizierten Behältnis und einer Identifikationsinformation.

Bevorzugt können dabei Tripel (oder n-Tupel) gebildet werden, welche sich aus dem besagten Abschnitt des aufgenommenen Bildes, dem in diesem Abschnitt gezeigten Behältnis und dessen Identifikationsinformation zusammensetzen.

Bevorzugt wird daher ein Farbsensor und insbesondere ein virtueller Farbsensor zum Erkennen und Unterscheiden verschiedenfarbiger Objekt und insbesondere Behältnisse verwendet.

Die Bildaufnahmeeinrichtung wird bevorzugt als Farbsensor, insbesondere als Teil eines solchen verwendet, insbesondere unter Verwendung einer Bildauswerteeinrichtung bzw. Bildanalyseeinrichtung. Im folgenden werden die Begriffe Bildauswertung und Bildanalyse synonym verwendet.

Bevorzugt wird ein Video bzw. eine Bildabfolge von der Bildaufnahmeeinrichtung aufgenommen. Bevorzugt erfolgt eine Auswertung und/oder Analyse einer Vielzahl von Bildern bzw. Frames dieses Videos bzw. dieser Bildabfolge.

Die Farbinformation, die aus dem Bildabschnitt ermittelt wird, kann wiederum dem bestimmten Behältnis und insbesondere auch über die Identifikationsinformation diesem Behältnis zugeordnet werden. Bevorzugt werden dabei mehrere insbesondere aufeinander folgende und/oder aufeinander abgestimmte Schritte durchgeführt, welche bevorzugt mittels Algorithmen durchgeführt werden. Wie oben erwähnt, werden von der Bildaufnahmeeinrichtung und insbesondere einem Kamerasystem Bilder oder Videos aufgenommen und dann die entsprechenden Bildinformationen übermittelt.

Besonders bevorzugt werden diese Bildinformationen auf ein Computersystem übertragen, wobei es sich bevorzugt um ein maschinennahes oder integriertes Computersystem handelt. Mit Hilfe dieses Computersystems kann bevorzugt die Bildauswertung durchgeführt werden.

Bevorzugt findet dabei auch bei Aufnahme eines Videos eine Bildauswertung einzelner Bilder dieses Videos statt.

Die Bildinformationen können dabei bevorzugt aus einem Life Videostream stammen. Daneben wäre es auch möglich, dass insbesondere für das Trainieren des Algorithmus bzw. einer künstlichen Intelligenz die Bildinformationen aus einem aufgezeichneten Video stammen.

Besonders bevorzugt werden einzelne Bilder oder die einzelnen Bilder dieses Videostreams zunächst mittels eines Bilderkennungsalgorithmus analysiert und besonders bevorzugt werden die vorhandenen Objekte und insbesondere die vorhandenen Behältnisse (auf welche bevorzugt der Algorithmus vorher trainiert wurde) erkannt. Dies erfolgt dabei bevorzugt unter Verwendung eines neuronalen Netzes.

Das Verfahren umfasst dabei bevorzugt, dass der Bilderkennung bzw. einer entsprechenden Bilderkennungseinrichtung und/oder (Bild)Analyseeinrichtung ein, insbesondere trainierbares, Behältnisidentifikations-Modell bereitgestellt wird.

Bevorzugt handelt es sich bei dem Behältnisidentifikations-Modell um ein, insbesondere trainierbares, Behältnisidentifikations-Modell maschinellen Lernens, welches einen Satz insbesondere trainierbarer, Parameter umfasst, welche auf Werte eingestellt sind, die als Ergebnis eines Trainingsprozesses gelernt wurden.

Bevorzugt verarbeitet die Analyseeinrichtung bzw. Bildauswerteeinrichtung die abgerufene (vorgegebene) Vielzahl von ortsaufgelösten Daten der Bildaufnahmeeinrichtung und/oder der Bilddaten oder hiervon abgeleitete Daten unter Verwendung des, insbesondere trainierbaren, Behältnisidentifikations-Modells maschinellen Lernens. Bevorzugt wird hierdurch und/oder auf Grundlage dieser Verarbeitung die wenigstens eine Ausgabegröße und/oder Information ermittelt (bevorzugt in einem Computer-implementierten Verfahrensschritt).

Bevorzugt wird durch das Verarbeiten von (ortsaufgelösten) Daten der Bildaufnahmeeinrichtung und/oder der Bilddaten in Bezug auf wenigstens ein Behältnis bevorzugt in Bezug auf mehrere Behältnisse in dem aufgenommenen Bild und bevorzugt in Bezug auf alle Behältnisse in dem aufgenommenen Bild unter Verwendung des Behältnisidentifikations-Modells wenigstens eine Behältniszustandsgröße und bevorzugt eine Vielzahl von Behältniszustandsgrößen ermittelt. Bei dieser Behältniszustandsgröße kann es sich etwa um für den Umriss eines Behältnisses oder eines Behältnisbereichs charakteristische Daten handeln. Daneben kann es sich bei der Behältniszustandsgröße auch etwa um einen typischen Umriss des oder der Behältnisse handeln. So können etwa dem aufgenommenen Bild Umrisse von erfassten Objekten entnommen werden und diese Umrisse als Bezugsgrößen verwendet werden.

Bevorzugt bezieht sich die wenigstens eine Behältniszustandsgröße auf (insbesondere genau) eine, insbesondere vorgegebene, Klasse eines Behältniszustands oder einen Bereich des Behältnisses. So wäre es denkbar, dass sich die Behältniszustandsgröße auf einen bestimmten Umriss des Behältnisses bezieht (etwa einen Umriss, der für eine bestimmte Gattung an Behältnissen, etwa für Dosen oder bestimmte Glasflaschen charakteristisch ist).

Bevorzugt ist die Behältniszustandsgröße für eine Wahrscheinlichkeit des Vorliegens dieser Klasse eines Behältniszustands bei den verarbeiteten ortsaufgelösten Bilddaten (der in den ortsaufgelösten Bilddaten dargestellten Behältnisse) charakteristisch.

Bevorzugt ist dem Behältnisidentifikations-Modell wenigstens eine Klasse eines Behältniszustands eines Behältnisses und bevorzugt eine Vielzahl von Klassen von Behältniszuständen zur Klassifizierung der zu verarbeitenden ortsaufgelösten Bilddaten vorgegeben. Bei diesen vorgegebenen Klassen kann es sich etwa um eingelernte oder typische Umrisse von bestimmten Behältnisgattungen oder Umrisse von bestimmten Bestandteilen von Behältnissen (etwa von Behältnisverschlüssen) handeln.

Bevorzugt basiert das Behältnisidentifikations-Modell maschinellen Lernens auf einem (künstlichen) neuronalen Netzwerk. Bevorzugt basiert (insbesondere damit) die Ermittlung der Ausgangsgröße, insbesondere einer Behältnisgattung oder einer Behältniserkennung, auf einem bzw. dem (künstlichen) neuronalen Netzwerk. Insbesondere werden die ortsaufgelösten Sensordaten und/oder Bilddaten (der abgerufenen Vielzahl von ortsaufgelösten Sensordaten und/oder Bilddaten) mittels des insbesondere trainierten (künstlichen) neuronalen Netzwerks verarbeitet.

Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Behältnisidentifikations-Modell bzw. dem (künstlichen) neuronalen Netzwerk die (zu verarbeitenden) Daten, insbesondere die ortsaufgelösten Sensordaten und/oder Bilddaten (oder hiervon abgeleitete Daten), als Eingangsgrößen zugeführt. Bevorzugt bildet das Behältnisidentifikations-Modell bzw. das künstliche neuronale Netzwerk die Eingangsgrößen in Abhängigkeit einer parametrierbaren Verarbeitungskette auf Ausgangsgrößen ab, wobei als Ausgangsgröße bevorzugt die Behältniszustandsgröße oder bevorzugt als Ausgangsgrößen eine Vielzahl von Behältniszustandsgrößen gewählt sind.

Bevorzugt wird das Behältnisidentifikations-Modell maschinellen Lernens bzw. das künstliche neuronale Netzwerk unter Verwendung vorgegebener Trainingsdaten trainiert, wobei durch das Training die parametrierbare Verarbeitungskette parametriert wird.

Bei einem bevorzugten Verfahren werden in dem Trainingsprozess des Behältnisidentifikations-Modells Trainingsdaten verwendet, welche eine von der wenigstens einen Bildaufnahmeeinrichtung erfasste Vielzahl von ortsaufgelösten Bilddaten (von Behältnissen oder Behältnisgruppen) umfassen. Dies bietet den Vorteil, dass bereits der Trainingsprozess spezifisch auf die einzustellende Behältnisinspektionsvorrichtung abgestimmt wird und beispielsweise damit spezifische Gegebenheiten der spezifischen Behältnisidentifikationsvorrichtung, wie optische Eigenschaften der Bildaufnahmeeinrichtung oder aber einer Beleuchtungseinrichtung oder auch spezifische Lichtverhältnisse in der Vorrichtung, unmittelbar berücksichtigt werden können.

Bevorzugt werden die zur Verwendung als Trainingsdaten vorgesehenen (von der wenigstens einen Bildaufnahmeeinrichtung erfassten) ortsaufgelösten Bilddaten mit (Behältnis-)Sorten- und/oder Klassifikationsmerkmalen versehen. Bevorzugt werden die ortsaufgelösten Bilddaten zusammen mit den jeweils ihnen zugeordneten (Behältnis-)Sorten- und/oder Klassifikationsmerkmalen als Trainingsdatensatz (insbesondere auf einer und/oder der nichtflüchtigen Speichereinrichtung) abgelegt.

Bevorzugt wird auf diese Weise eine Vielzahl von Trainings-Datensätzen erzeugt. Bei den Klassifikationsmerkmalen kann es sich dabei um die (obig beschriebenen) Klassen eines Behältniszustands und/oder eine hierauf bezogene Behältniszustandsgröße handeln. So können etwa die einem Behältnis zugeordneten ortsaufgelösten Bilddaten mit den darin vorkommenden Defektarten und dergleichen klassifiziert sein. Anmerkung: Bevorzugt werden die spezifischen Trainingsdaten einem zentralen Datensatz zugeführt, um einen übergeordneten Algorithmus zu trainieren, der alle Informationen und Daten beinhaltet und als globale Datenpool fungiert, alternativ kann auch ein zentraler Algorithmus nach und nach mit den spezisfischen Daten nachtrainiert werden um in so weit zu entwickeln, dass er einen Stand erreicht in dem der Trainingsaufwand für das Erkennen neuer Objekte deutlich reduziert werden kann

Denkbar ist (zusätzlich oder alternativ) auch, dass als Trainingsdaten ortsaufgelöste Bilddaten von Behältnisgruppen (oder hiervon abgeleitete Daten) verwendet werden, die von einer Bildaufnahmeeinrichtung (wenigstens) einer anderen, bevorzugt baugleichen, Behältnisidentifikationsvorrichtung (bevorzugt desselben Herstellers) erfasst wurden. Dies bietet den Vorteil, dass hierdurch eine große Vielzahl an Bilddaten bereitgestellt und verwendet werden kann.

Denkbar ist auch, dass als Trainingsdaten (ausschließlich oder teilweise) synthetisch erzeugte oder via Augmentierung (engl. data augmentation) erzeugte ortsaufgelöste Sensordaten (oder hiervon abgeleitete Daten) verwendet werden. Dies bietet den Vorteil, dass etwa selten auftretende Klassen von Behältniszuständen (oder hier insbesondere seltene Behältnisgattungen, wie etwa ovale Behältnisse oder Behältnisse mit besonders ausgestalteten Bereichen hierdurch simuliert und das Modell maschinellen Lernens hiermit in effizienter Weise trainiert werden kann.

Der Trainingsprozess kann dabei lokal (bei der Behältnisidentifikationsvorrichtung und/oder der Einstelleinrichtung) und/oder zentral und/oder örtlich unabhängig und/oder auf einem externen Server in Bezug auf die Behältnisidentifikaitionsvorrichtung vorgenommen werden.

Bevorzugt wird ein derart trainiertes neuronales Netzwerk (im Rahmen und/oder als Behältnisidentifikations-Modell) eingesetzt. Bevorzugt erfolgt das Training mittels überwachten Lernens. Es wäre jedoch auch möglich, das Behältnisidentifikations-Modell bzw. das Künstliche Neuronale Netz mittels unbeaufsichtigten Lernens, bestärkendem Lernen oder stochastischem Lernen zu trainieren.

Zur Auswertung der ortsaufgelösten Bilddaten verarbeitet bevorzugt die Bildauswerteeinrichtung diese Bilddaten oder hiervon abgeleitete Daten unter Verwendung des Behältnisidentifikations-Modells. Dabei wird durch die Verwendung des Behältnisidentifikations-Modells wenigstens ein (computer-implementiertes) Computer-Vision-Verfahren verwendet, in welchem (computer-implementierte) Wahrnehmungs- und/oder Erfassungsaufgaben ausgeführt werden, beispielsweise (computer-implementierte) 2D - und/oder 3D- Objekterkennungsverfahren und/oder (computer-implementierte) Verfahren zur semantischen Segmentierung und/oder (computer-implementierte) Objektklassifizierung ("Image classification") und/oder (computer-implementierte) Objektlokalisierung und/oder (computer-implementierte) Kantenerkennung.

Bevorzugt werden dem Behältnisidentifikations-Modell als Eingabegrößen die ortsaufgelösten Bilddaten oder hiervon abgeleitete Daten zugeführt. Bevorzugt gibt das Behältnisinspektions-Modell als Ausgabegröße wenigstens eine Behältniszustandsgröße und bevorzugt die Vielzahl von Behältniszustandsgrößen aus.

Dabei wird bei der Objektklassifizierung bevorzugt ein in den ortsaufgelösten Sensordaten oder hiervon abgeleiteten Daten in Bezug auf ein Behältnis erfasstes und/oder dargestelltes Objekt einer (bzw. der vorher eingelernten und/oder vorgegebenen) Klasse eines Behältniszustands zugeordnet.

Bei einer Objektlokalisierung oder Objektidentifizierung wird insbesondere zusätzlich zu einer Objektklassifizierung ein Ort eines in den ortsaufgelösten Sensordaten erfassten und/oder dargestellten Objekts (insbesondere in Bezug auf die ortsaufgelösten Sensordaten und/oder Bilddaten) bestimmt bzw. ermittelt, welcher insbesondere durch eine sogenannte Bounding Box markiert und/oder hervorgehoben wird. Bei der semantischen Segmentierung wird insbesondere jedem Pixel der ortsaufgelösten Sensordaten oder hiervon abgeleiteter Daten eine Klasse eines Behältniszustands oder eine Klasse der Behältnisgattung (zur Klassifizierung eines Objekts) (insbesondere aus einer insbesondere vorgegebenen Vielzahl von Klassen eines Behältniszustands und/odere einer Vielzahl von Behältnissgattungen) zugeordnet (Klassen-Annotation).

Dabei handelt es sich bei den Klassen eines Behältniszustands und/oder der Behältnisgattung (zur Klassifizierung der ortsaufgelösten Bilddaten oder hiervon abgeleiteter Daten in Bezug auf ein Behältnis) bevorzugt um die und/oder einige und/oder alle der obig beschriebenen Klassen von Behältniszuständen und/oder Behältnisgattungen.

Bevorzugt wird bei jedem rekodiertem oder gestreamten Frame und/oder Bild von der Kamera diese Auswertung durchgeführt und bevorzugt werden mehrere und besonders bevorzugt alle Behältnisse in diesem Frame oder diesem Bild identifiziert.

Bevorzugt wird anschließend jedem (identifizierten) Behältnis eine eindeutige Identifikationsinformation insbesondere eine eindeutige ID zugeordnet und besonders bevorzugt wird diese einem Ausschnitt des Behälters und/oder des aufgenommenen Bildes für den nächsten Schritt der Farberkennung zugeordnet. Bevorzugt wird diese Zuordnung abgespeichert. Anmerkung: Diese ID bleibt auch erhalten, wenn die Bilder mehrerer Kameras zusammengefügt werden. Die Identifikation kann so über mehrere aneinander oder ineinander gefügte Bilder, Bildsequenzen aus mehreren Kameras erfolgen (kommt noch in Seite 11 Abs 5)

So ist es möglich, dass die einzelnen Bildabschnitte komplette Behältnisse zeigen, es wäre jedoch auch möglich, dass die Bilder nur Teile einzelner Behältnisse, etwa deren Deckelabschnitte zeigen. Diese Zuordnung erfolgt insbesondere für den darauffolgenden Schritt der Farberkennung.

Bevorzugt ermöglicht es die ID oder die Identifikationsinformation auch, das Behältnis nicht nur in Kamerakoordinaten zu finden, sondern bevorzugt auch in ein globales Koordinatensystem zu übertragen. Dieses Koordinatensystem kann, wie unten genau erwähnt, auf einem Aktor verwendet werden, um eine geeignete Reaktion für eine bestimmte Objekts weiter zu ermitteln und/oder zu bestimmen.

Bevorzugt behält das Behältnis diese Identifikationsinformation, welche besonders bevorzugt eine eindeutige Identifikation des Behälters ist oder beschreibt und/oder welche die Behältervariante über den gesamten zu überwachenden Bereich beschreibt.

Bevorzugt wird der Bildausschnitt aus dem Objekterkennungsschritt im Weiteren für eine Farbbestimmung verwendet. Dabei ist es möglich und bevorzugt, dass die Farbstruktur während der Variante unterteilt wird, beispielsweise wenn ein Behältnis verschiedene Geschmackssorten hat. In diesem Fall kann jede Sorte durch mehrere Farben erkannt werden. Bevorzugt handelt es sich bei diesen Farben um die Zielfarben, und diese konstruieren bzw. bilden eine Farbstruktur. Daneben kann eine bestimmte Variante auch durch diese Farbpalette markiert werden.

Besonders bevorzugt wird eine Vielzahl von Bildern oder ein Video aufgenommen. Die Behältnisse unterscheiden sich besonders bevorzugt wenigstens teilweise durch ihre Farben und/oder Farbzusammensetzungen.

In diesem Zusammenhang wird darauf hingewiesen, dass unter den Behältnissen nicht nur die eigentlichen Behältnisse verstanden werden sondern bevorzugt auch etwaige Ausstattungen dieser Behältnisse wie etwa Etiketten oder Behältnisverschlüsse oder Aufdrucke.

Bevorzugt sind die Behältnisse verschlossen und/oder etikettiert und insbesondere farblich unterscheidbar.

Bevorzugt werden mehrere Bilder eines Videostreams analysiert.

Wie oben erwähnt, ermöglicht es die Identifikationsinformation, ein Behältnis sowohl in Kamerakoordinaten als in übergeordneten Koordinaten aufzufinden.

Besonders bevorzugt werden mehrere Gattungen an Behältnissen erfasst, bevorzugt wenigstens drei, bevorzugt wenigstens vier und bevorzugt wenigstens fünf unterschiedliche Gattungen. Diese Gattungen haben dabei bevorzugt unterschiedliche Eigenschaften und insbesondere unterschiedliche farbliche Eigenschaften.

So kann es sich beispielsweise um unterschiedliche Geschmacksrichtungen einer in den Behältnissen befindlichen Flüssigkeit und insbesondere eines Getränks handeln. Bevorzugt haben dabei diese unterschiedlichen Behältnisse jeweils bestimmte Eigenschaften, insbesondere wie oben erwähnt, geschmackliche Eigenschaften. Bevorzugt sind dabei diese Eigenschaften mit unterschiedlichen Ausstattungsmerkmalen verknüpft, wie insbesondere aber nicht ausschließlich unterschiedlichen Etiketten, unterschiedlichen Verschlüssen und/oder unterschiedlichen Aufdrucken.

Besonders bevorzugt werden die Bilder oder Videos in einem Auflichtverfahren aufgenommen. Bevorzugt werden die Behältnisse beleuchtet und die Bildaufnahmeeinrichtung nimmt Bilder der beleuchteten Behältnisse und/oder Behältnisbereiche auf.

Bevorzugt nimmt die Bildaufnahmeeinrichtung wenigstens die Oberseiten der Behältnisse auf.

Wenn sich in einem aufgenommenen Bild beispielsweise n Behältnissen finden, ist es möglich, das Bild beispielsweise in n Abschnitte, z.B. 20 Abschnitte zu unterteilen, die bevorzugt jeweils ein Behältnis und/oder einen Teil eines Behältnisses zeigen.

Weiterhin wird bevorzugt jedem Behältnis ein Abschnitt und diesem Abschnitt wiederum eine Identifikationsinformation zugeordnet, welche anschließend weiterverwendet werden kann.

Bei einem weiteren bevorzugten Verfahren wird eine Aktor- und/oder Sortiereinrichtung, welche dazu geeignet und bestimmt ist, auf das identifizierte Behältnis einzuwirken, unter Berücksichtigung der Farbinformation gesteuert.

Anhand der Farbinformation kann auf das Behältnis und/oder dessen Inhalt geschlossen werden. Entsprechend kann die besagte Aktoreinrichtung angesteuert werden, um beispielsweise das Behältnis in eine bestimmte Richtung beispielsweise auf ein bestimmtes weiteres Transportband zu leiten und/oder zu lenken.

Bevorzugt ist daher die Aktoreinrichtung dazu geeignet und bestimmt, Behältnisse, die aufgrund der zu diesen Behältnissen ermittelten Farbinformation als zu unterschiedlichen Gattungen gehörig identifiziert wurden, unterschiedlich zu behandeln.

Bei einem bevorzugten Verfahren ist die Aktoreinrichtung aus einer Gruppe von Aktoreinrichtungen ausgewählt, welche Roboter, Roboterarme, Stoßeinrichtungen zum Ausstoßen und/oder Verschieben einzelner Behältnisse aus dem Transportpfad, Weichen zum Ausschleusen einzelner Behältnisse aus dem Transportpfad oder dergleichen ausgewählt.

Bei einem weiteren bevorzugten Verfahren transportiert eine Transporteinrichtung die Behältnisse entlang eines vorgegebenen Transportpfads und bevorzugt wird das wenigstens eine Bild oder Video der Behältnisse während des Transports der Behältnisse aufgenommen. So kann es sich beispielsweise bei der Transporteinrichtung um ein Transportband oder mehrere Transportbänder oder auch mehrere Transportketten handeln.

Besonders bevorzugt werden die Behältnisse geradlinig transportiert. Besonders bevorzugt werden die Behältnisse stehend transportiert. Bei einem weiteren bevorzugten Verfahren werden die Behältnisse gruppenweise und/oder in einem Pulk transportiert.

Bei einem weiteren bevorzugten Verfahren werden die Behältnisse ungeordnet und/oder in zufälliger Abfolge transportiert.

Bei einem weiteren bevorzugten Verfahren wird das wenigstens eine Bild mittels eines Bilderkennungsalgorithmus analysiert.

Bei einem weiteren bevorzugten Verfahren erfolgt das Identifizieren einzelner Behältnisse oder Behältnisbereiche mittels eines Algorithmus.

Bei einem weiteren bevorzugten Verfahren erfolgt die Ermittlung der Farbinformation mittels eines Algorithmus.

Bevorzugt erfolgen wenigstens zwei der oben genannten Schritte mittels eines Algorithmus. Dabei kann es sich sowohl um den ersten und den dritten als auch den ersten und zweiten als auch um den zweiten und den dritten Schritt handeln.

Bevorzugt erfolgen alle drei der genannten Schritte mittels eines Algorithmus.

Besonders bevorzugt werden daher aufeinanderfolgend wenigstens zwei und bevorzugt wenigstens drei Algorithmen verwendet. Auf diese Weise können die vorhandenen Objekte, insbesondere Behältnisse erkannt und/oder identifiziert werden.

Bei einem weiteren bevorzugten Verfahren werden alle Behältnisse in einem aufgenommenen Bild identifiziert.

Bei einem weiteren bevorzugten Verfahren wird der Bildausschnitt aus dem Objekt- bzw. Behältniserkennungsschritt für eine Farbbestimmung verwendet. Bei einem weiteren bevorzugten Verfahren wird eine Zielfarbe in dem Bild oder dem Bildausschnitt gesucht und es wird die Information zurückgegeben, wie viel von dieser Farbe in dem Bildausschnitt vorhanden ist und/oder zu welchem Anteil diese Farbe in dem Bildausschnitt vorhanden ist. Dabei kann die Suchmethode, wie unten genauer beschrieben, unter Verwendung verschiedener Farbsysteme erfolgen.

Bei einem weiteren bevorzugten Verfahren wird mittels der Identifikationsinformation ein Behältnis in Kamerakoordinaten gefunden und/oder die Identifikationsinformation wird an ein übergeordnetes Koordinatensystem übertragen. Dieses kann, wie oben erwähnt, von der Aktoreinrichtung verwendet werden, insbesondere zu deren Ansteuerung.

Bei einem weiteren bevorzugten Verfahren wird jedem Behältnis oder Behältnisbereich oder Behältnistyp eine bestimmte Farbe oder Farbgruppe zugeordnet. Auf diese Weise kann umgekehrt, wenn eine bestimmte Farbinformation vorhanden ist, darauf geschlossen werden, um welche Gattung Behältnis es sich hier handelt. Bei einem weiteren bevorzugten Verfahren wird in dem Bildabschnitt wenigstens eine Farbe und bevorzugt eine Vielzahl von Farben aufgefunden. Besonders bevorzugt wird anhand von Anteilen der einzelnen Farben auf das Behältnis geschlossen.

So kann beispielsweise ein bestimmter Bildabschnitt 20 % Anteile rot aufweisen (bei einer pixelweisen Auswertung). Dies kann dann als Hinweis auf eine bestimmte Behältnissorte verwendet werden. Daneben sind jedoch auch komplexere Auswertungen denkbar. So kann beispielsweise die Farbinformation darin bestehen, dass der Bildabschnitt etwa 20 % rot und 20 % grün enthält. Auch mittels dieser Farbinformation kann ein Behältnis identifiziert werden.

Bei einem weiteren bevorzugten Verfahren erfolgt eine pixelweise Auswertung des aufgenommenen Bildes.

Wie oben erwähnt erfolgt das Auffinden der Farben unter Verwendung wenigstens eines Farbsystems, wobei das Farbsystem bevorzugt aus einer Gruppe von Farbsystemen ausgewählt ist, welche HSV, L*A*B, und YCbCr enthält. Bevorzugt wird je nach Farbe ein System für diese Farbe ausgewählt. Das Verfahren sucht innerhalb des möglichen Bereichs für diese Farbe und gibt besonders bevorzugt zurück, wie viele Pixel (des aufgenommenen Bildes und/ Frames) in diese Farbkategorie fallen.

Dabei ist es beispielsweise möglich, dass unterschiedliche Schattierungen von Farben einer bestimmten Farbe zugeordnet werden, beispielsweise unterschiedliche Rottöne jeweils als rot charakterisiert werden, unterschiedliche Blautöne als blau und dergleichen. Auf diese Weise ist die Berechnung einer Farbintensität möglich und diese wird bevorzugt auch verwendet, um eine zweite und/oder dritte Zielfarbe zu bestimmen.

Bevorzugt kann ein Konstrukt der Behältervariante auf einem vordefinierten Satz von Variantennamen beruhen. Dabei kann der Variantenname eine Farbpalette sein, welche eine Farbstruktur aufbaut.

Auf diese Weise ist es möglich, eine Behältnisvariante mit dieser Methode zu erkennen. Besonders bevorzugt sind Zielfarben auf einem Behältnisdeckel oder einer Behälterseite definiert.

Bevorzugt kann je nach Farbe ein anderes Farbsystem ausgewählt werden.

Besonders bevorzugt wird angegeben und insbesondere pixelweise angegeben, wie viele Pixel eine bestimmte Farbe aufweist. Auf diese Weise kann auch die Intensität der Farbe ermittelt werden.

Bei einer weiteren bevorzugten Ausführungsform wird die Analyse des wenigstens eines aufgenommenen Bildes, das Identifizieren der einzelnen Behältnisse und/oder die Ermittlung der Farbinformation unter Verwendung einer künstlichen Intelligenz durchgeführt.

Bevorzugt wird zur Ermittlung der Farbinformation nur ein Abschnitt des aufgenommenen Bildes ausgewertet und besonders bevorzugt nur ein Abschnitt eines Bildabschnitts, der ein Behältnis zeigt. Bevorzugt werden nur diejenigen Bereiche eines Bildabschnitts ausgewertet, welche das in dem Bildabschnitt gezeigte Behältnis bzw. Bereiche des Behältnisses zeigen.

Bevorzugt wird dabei für jedes Bildpixel oder für Bildpixelgruppen entschieden, ob diese einen Bereich des Behältnisses wiedergeben (oder auch mit welcher Wahrscheinlichkeit diese Bildpixel einen bestimmten Bereich des Behältnisses wiedergeben).

Für die Ermittlung der Farbinformation kann in ähnlicher Weise vorgegangen werden, wie dies obenstehend unter Bezugnahme auf die Behältnisidentifikation beschrieben wurde.

Zu diesem Zweck weist die Vorrichtung bevorzugt eine Farbauswerteinrichtung auf, welche dazu geeignet und bestimmt ist aus einem aufgenommenen Bild und insbesondere einem Abschnitt des aufgenommenen Bildes, wer ein Behältnis und/oder einen Abschnitt des Behältnisses zeigt, eine Farbinformation zu ermitteln.

Das Verfahren umfasst weiterhin, dass der Vorrichtung ein, insbesondere trainierbares, Farbauswertungs-Modell bereitgestellt wird.

Bevorzugt handelt es sich bei dem Farbauswertungs-Modell um ein, insbesondere trainierbares, Farbauswertungs-Modell maschinellen Lernens. Bevorzugt wird hierdurch und/oder auf Grundlage dieser Verarbeitung die wenigstens eine Farbinformation ermittelt (bevorzugt in einem Computer-implementierten Verfahrensschritt).

Bevorzugt wird durch das Verarbeiten von (ortsaufgelösten) Bilddaten in Bezug auf (genau) ein Behältnis unter Verwendung des Farbauswertungs-Modells wenigstens eine Farbinformation und/oder wenigstens ein Farbwert ermittelt.

Bevorzugt bezieht sich die wenigstens eine Farbinformation auf (insbesondere genau) ein, insbesondere vorgegebenes Behältnis oder den Bereich eines Behältnisses. Bevorzugt ist die Farbinformation für eine Wahrscheinlichkeit des Vorliegens einer Farbe eines Behältnisses oder eines bestimmten Bereichs eines Behältnisses bei den verarbeiteten ortsaufgelösten Bilddaten (des in den ortsaufgelösten Bilddaten dargestellten Behältnisses oder Behältnisbereichs) charakteristisch.

Bevorzugt ist dem Farbauswertungs-Modell wenigstens eine Klasse einer Farbinformation eines Behältnisses und bevorzugt eine Vielzahl von Farbinformationen von Behältnissen oder Behältnisbereichen zur Klassifizierung der zu verarbeitenden ortsaufgelösten Bilddaten vorgegeben.

Bevorzugt basiert das Farbauswertungs-Modell maschinellen Lernens auf einem (künstlichen) neuronalen Netzwerk. Bevorzugt basiert (insbesondere damit) die Ermittlung der Farbinformation, auf einem bzw. dem (künstlichen) neuronalen Netzwerk. Insbesondere werden die ortsaufgelösten Bilddaten (der abgerufenen Vielzahl von ortsaufgelösten Bilddaten) mittels des insbesondere trainierten (künstlichen) neuronalen Netzwerks verarbeitet.

Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Farbauswertungs-Modell bzw. dem (künstlichen) neuronalen Netzwerk die (zu verarbeitenden) Daten, insbesondere die ortsaufgelösten Sensordaten (oder hiervon abgeleitete Daten), als Eingangsgrößen zugeführt. Bevorzugt bildet das Farbauswertungs-Modell bzw. das künstliche neuronale Netzwerk die Eingangsgrößen in Abhängigkeit einer parametrierbaren Verarbeitungskette auf Ausgangsgrößen ab, wobei als Ausgangsgröße bevorzugt die Behältnisfarbe (oder die Farbe des ausgewerteten Bereichs des Behältnisses) oder bevorzugt als Ausgangsgrößen eine Vielzahl von Behältnisfarben gewählt sind.

Bevorzugt wird das Farbauswertungs-Modell maschinellen Lernens bzw. das künstliche neuronale Netzwerk unter Verwendung vorgegebener Trainingsdaten trainiert, wobei durch das Training die parametrierbare Verarbeitungskette parametriert wird.

Bei einem bevorzugten Verfahren werden in dem Trainingsprozess des Farbauswertungs-Modells Trainingsdaten verwendet, welche eine von der wenigstens einen Bildaufnahmeeinrichtung erfasste Vielzahl von ortsaufgelösten Bilddaten (von Behältnissen oder Behältnisbereichen) umfassen. Dies bietet den Vorteil, dass bereits der Trainingsprozess spezifisch auf die einzustellende Vorrichtung abgestimmt wird und beispielsweise damit spezifische Gegebenheiten der spezifischen Vorrichtung, wie optischen Eigenschaften der Bildaufnahmeeinrichtung oder auch spezifische Lichtverhältnisse in der Vorrichtung, unmittelbar berücksichtigt werden können.

Bevorzugt werden die zur Verwendung als Trainingsdaten vorgesehenen (von der wenigstens einen Bildaufnahmeeinrichtung erfassten) ortsaufgelösten Bilddaten mit (Behältnis-)Sorten- und/oder Klassifikationsmerkmalen versehen. Bevorzugt werden die ortsaufgelösten Bilddaten zusammen mit den jeweils ihnen zugeordneten (Behältnis-)Sorten- und/oder Klassifikationsmerkmalen als Trainingsdatensatz (insbesondere auf einer und/oder der nichtflüchtigen Speichereinrichtung) abgelegt. Bevorzugt wird auf diese Weise eine Vielzahl von Trainings-Datensätzen erzeugt. Bei den Klassifikationsmerkmalen kann es sich dabei um die (obig beschriebenen) Klassen von Farben der Behältnisse oder Behältnisbereiche und/oder eine hierauf bezogene Zustandsgröße handeln. So können etwa die einem Behältnis zugeordneten ortsaufgelösten Bilddaten mit den darin vorkommenden Defektarten und dergleichen klassifiziert sein.

Denkbar ist (zusätzlich oder alternativ) auch, dass als Trainingsdaten ortsaufgelöste Bilddaten von Behältnissen (oder hiervon abgeleitete Daten) verwendet werden, die von einer Bildaufnahmeeinrichtung (wenigstens) einer anderen, bevorzugt baugleichen, Vorrichtung (bevorzugt desselben Herstellers) erfasst wurden. Dies bietet den Vorteil, dass hierdurch eine große Vielzahl an Bilddaten bereitgestellt und verwendet werden kann.

Denkbar ist auch, dass als Trainingsdaten (ausschließlich oder teilweise) synthetisch erzeugte oder via Augmentierung (engl. data augmentation) erzeugte ortsaufgelöste Bilddaten (oder hiervon abgeleitete Daten) verwendet werden. Dies bietet den Vorteil, dass etwa selten auftretende Klassen von Behältniszuständen oder seltene Behältnisse hierdurch simuliert und das Modell maschinellen Lernens hiermit in effizienter Weise trainiert werden kann.

Der Trainingsprozess kann dabei lokal (bei der Vorrichtung und/oder der Farbauswerteeinrichtung) und/oder zentral und/oder örtlich unabhängig und/oder auf einem externen Server und/oder in der Cloud in Bezug auf die Vorrichtung vorgenommen werden.

Bevorzugt wird ein derart trainiertes neuronales Netzwerk (im Rahmen und/oder als Farbauswertungs-Modell) eingesetzt. Bevorzugt erfolgt das Training mittels überwachtem Lernen. Es wäre jedoch auch möglich, das Farbauswertungs-Modell bzw. das künstliche Neuronale Netz mittels unbeaufsichtigtem Lernen, bestärkendem Lernen oder stochastischem Lernen zu trainieren.

Zur Auswertung der ortsaufgelösten Sensordaten verarbeitet bevorzugt die Farbauswerteeinrichtung diese Bilddaten oder hiervon abgeleitete Daten unter Verwendung des Farbauswertungs-Modells. Dabei wird durch die Verwendung des Farbauswertungs-Modells wenigstens ein (computer-implementiertes) Computer-Vision-Verfahren verwendet, in welchem (computer-implementierte) Wahrnehmungs- und/oder Erfassungsaufgaben ausgeführt werden, beispielsweise (computer-implementierte) 2D - und/oder 3D- Objekterkennungsverfahren und/oder (computer-implementierte) Verfahren zur semantischen Segmentierung und/oder (computer-implementierte) Objektklassifizierung ("Image classification") und/oder (computer-implementierte) Objektlokalisierung und/oder (computer-implementierte) Kantenerkennung.

Bevorzugt werden dem Farbauswertungs-Modell als Eingabegrößen die ortsaufgelösten Bilddaten oder hiervon abgeleitete Daten zugeführt. Bevorzugt gibt das Farbauswertungs-Modell als Ausgabegröße wenigstens eine Behältniszustandsgröße und bevorzugt die Vielzahl von Behältniszustandsgrößen aus. Wie oben erwähnt handelt es sich hier insbesondere um Farbwerte und/oder Farbinformationen.

Dabei wird bei der Objektklassifizierung ein in den ortsaufgelösten Bilddaten oder hiervon abgeleiteten Daten in Bezug auf ein Behältnis (oder einen Behältnisbereich) erfasstes und/oder dargestelltes Objekt einer (bzw. der vorher eingelernten und/oder vorgegebenen) Klasse eines Behältniszustands (insbesondere einer Farbinformation) zugeordnet.

Bei einem weiteren bevorzugten Verfahren wird die ermittelte Farbstruktur eines Bildabschnitts einem bestimmten Behältnis, einem bestimmten Behältnisbereich oder einer bestimmten Behältnisgattung zugeordnet. Dies kann beispielsweise anhand bestimmter Farbanteile erfolgen.

Besonders bevorzugt, enthält ein Bildabschnitt ein bestimmtes Behältnis oder einen bestimmten Behältnisbereich. Dieser Bildabschnitt weist bevorzugt bestimmte Farben oder Farbanteile auf. Aus diese Farbanteilen kann auf die Gattung des Behältnisses geschlossen werden und bevorzugt kann auch die oben erwähnte Aktoreinrichtung eine bestimmte Maßnahme einleiten, beispielsweise das besagte Behältnis auf ein bestimmtes Transportband oder auf ein bestimmtes weiterführendes Transportband ausleiten.

Die vorliegende Erfindung ist weiterhin auf eine Vorrichtung zum Sortieren oder Identifizieren von Behältnissen gerichtet, wobei die Vorrichtung eine Transporteinrichtung aufweist, welche die Behältnisse entlang eines vorgegebenen Transportpfads transportiert und wobei die Vorrichtung wenigstens eine Bildaufnahmeeinrichtung zur Aufnahme wenigstens eines Bildes und/oder Videos einer Vielzahl von Behältnissen und insbesondere von (von der Transporteinrichtung) transportierten Behältnissen aufweist, wobei die Bildaufnahmeeinrichtung zur Aufnahme ortsaufgelöster Farbbilder geeignet und bestimmt ist.

Weiterhin weist die Vorrichtung eine Analyseeinrichtung zur Analyse des aufgenommenen Bildes oder der aufgenommenen Bilder auf, welche dazu geeignet und bestimmt ist ein einzelnes Behältnis innerhalb des aufgenommenen Bildes identifizieren oder auch einen Bereich eines einzelnen Behältnisses innerhalb des aufgenommenen Bildes zu identifizieren.

Erfindungsgemäß weist die Vorrichtung eine Zuordnungseinrichtung auf, welche dazu geeignet und bestimmt ist, einen Bildabschnitt des aufgenommenen Bildes, welcher bevorzugt das identifizierte Behältnis enthält, einer Identifikationsinformation zuzuordnen.

Weiterhin ist eine Farbinformationsermittlungseinrichtung vorgesehen, welche dazu geeignet und bestimmt ist, eine für dieses Behältnis und/oder diesen Bildabschnitt charakteristische Farbinformation zu ermitteln. Alternativ kann die Farbinformationsermittlungseinrichtung auch dazu geeignet sein, eine für einen Behältnisabschnitt oder Behältnisbereich und/oder für diesen Bildabschnitt charakteristische Farbinformation zu ermitteln.

Bei einer weiteren bevorzugten Ausführungsform fördert die Transporteinrichtung die Behältnisse in einem Pulk und insbesondere ungeordnet.

Bei einem weiteren bevorzugten Verfahren ist insbesondere durch die Analyseeinrichtung auch eine Position der Behältnisse (bezüglich der Transporteinrichtung) erfassbar und/oder andere geometrische Eigenschaften wie etwa ein Durchmesser des oder der Behältnisse und/oder der Mittelachsen. Auch auf diese Weise können Bildabschnitte erzeugt werden.

Besonders bevorzugt enthält die Farbinformation Farbanteile, wenigstens einen Farbanteil einer bestimmten Farbe und/oder mehrere Farbanteile mehrerer Farben.

Bei einer weiteren vorteilhaften Ausführungsform ist eine Bildabschnitterzeugungseinheit vorgesehen, welche das Bild in mehrere Abschnitte unterteilt, welche bevorzugt jeweils ein Behältnis oder einen Behältnisbereich zeigen. Dies kann dabei insbesondere auch im Wege einer Auswertung des Bildes erfolgen.

Bei einer weiteren vorteilhaften Ausführungsform weist die Vorrichtung eine Speichereinrichtung zum Speichern von Bildern oder Bildabschnitten auf. Dabei können sowohl neu aufgenommene Bilder gespeichert werden als auch die entsprechenden Bildabschnitte. Daneben können jedoch auch Referenzbilder oder Referenzbildabschnitte gespeichert werden, mit deren Hilfe eine künstliche Intelligenz die entsprechende Auswertung der Bilder übernehmen kann. Bei einer weiteren vorteilhaften Ausführungsform ist eine Vergleichseinrichtung vorgesehen, welche aufgenommene Bilder mit vorher abgespeicherten Bildern vergleicht oder welche aufgenommene Bildabschnitte mit gespeicherten Bildabschnitten vergleicht.

Besonders bevorzugt weist die Vorrichtung eine KI (Künstliche Intelligenz) Einheit auf.

Bei einer weiteren vorteilhaften Ausführungsform weist die Vorrichtung eine Aktoreinrichtung zum Sortieren und/oder zum Einwirken auf die Behältnisse auf, wobei weiterhin bevorzugt eine Steuerungseinrichtung vorgesehen ist, welche diese Aktoreinrichtung und/oder Sortiereinrichtung in Abhängigkeit von der für das Behältnis charakteristischen Farbinformation steuert. Bevorzugt ist diese Aktoreinrichtung stromabwärts der Bildaufnahmeeinrichtung in der Transportrichtung der Behältnisse angeordnet.

Bevorzugt weist die Vorrichtung eine Triggereinrichtung zum Triggern der Aktoreinrichtung auf. Bei dieser Triggereinrichtung kann es sich beispielsweise um Lichtschranken handeln. Daneben wäre es jedoch auch denkbar, dass auch die Bildaufnahmeeinrichtung getriggert ist.

Bei einem weiteren Verfahren nimmt die Bildaufnahmeeinrichtung ein Video auf, aus welchem beispielsweise einzelne oder auch aufeinanderfolgende Bilder ausgewertet werden.

Bei einer weiteren vorteilhaften Ausführungsform weist die Vorrichtung eine Beleuchtungseinrichtung auf, welche die Behältnisse mit einer vorgegebenen Lichtquelle beleuchtet. Vorteilhaft handelt es sich dabei um eine einheitliche Beleuchtung. Auf diese Weise kann auch sichergestellt werden, dass für ein bestimmtes Behältnis immer die gleiche Farbinformation ausgegeben wird. Bei einer bevorzugten Ausführungsform weist die Beleuchtungseinrichtung eine Weißlichtquelle auf.

So ist es beispielsweise möglich, dass eine Farbinformation ermittelt wird, welche 30 % rot, 20 % grün und 10 % blau enthält. Diese Farbinformation kann einer bestimmten Gattung von Behältnissen zugeordnet werden, welche beispielsweise in einer Speichereinrichtung abgelegt ist. Damit kann aus der Farbinformation ermittelt werden, dass es sich bei dem Behältnis, in dem entsprechenden Bildabschnitt um ein Behältnis des Typs A handelt und entsprechend kann die Aktoreinrichtung angesteuert werden.

Die vorliegende Erfindung ist weiterhin auf eine Anlage zur Getränkeherstellung mit einer Abfülleinrichtung zum Befüllen von Behältnissen und einer dieser Abfülleinrichtung nachgeordneten Vorrichtung der oben beschriebenen Art gerichtet.

Wie oben erwähnt, kann eine Alternative der erfindungsgemäßen Vorgehensweise auch darin bestehen, dass aus einer Objekterkennung bzw. der Behältniserkennung beispielsweise ein spezifischer Punkt, wie etwa ein Mittelpunkt des Behältnisses bekannt ist. Daneben kann auch der Behältnisdurchmesser bekannt sein. Auf diese Weise können daher viele Bereiche konstruiert werden und es kann die dominante Farbe in jedem Bereich bestimmt werden. Auf diese Weise wäre es möglich, die Farbinformation auf Basis beispielsweise einer Verschlusskappe eines Behältnisses zu ermitteln oder auch auf Basis einer Flüssigkeit, die sich in dem Behältnis befindet oder auch auf Basis der Farbinformation, die sich etwa aus einem Etikett ergibt. Auch können mehrere dieser Vorgehensweisen kombiniert werden

Bevorzugt kann dabei eine dominante Farbe in jedem Bereich bestimmt werden. Daneben wäre es auch möglich, dass ein Variantenname die dominante Farbe in einem bestimmten Bereich darstellt. In diesem Zusammenhang wir darauf hingewiesen, dass bevorzugt auch schwarz und weiß sowie Grautöne im Rahmen dieser Anmeldung als Farben angesehen werden.

Weiterhin wäre es möglich, die beiden Bereiche des Behältnisses zu markieren, beispielsweise mit Kreisen zu definieren. Es sind jedoch auch andere Formen möglich. Bevorzugt findet die Suche nach der Farbe nur innerhalb dieser genannten Bereiche statt. In diesem Fall kann beispielsweise bei einem Bild oder Bildabschnitt ein bestimmter Bereich des aufgenommenen Behältnisses markiert werden und dieser entsprechend farblich ausgewertet werden.

Mithilfe der Erfindung können Bereiche einer Getränkeabfüllung, eines Behältnistransportsystems, eines Maschinenauslaufs oder aber einer Behälterbehandlungsmaschine überwacht werden und bevorzugt in Echtzeit überwacht werden. Dabei können Behältnisse verschiedener Sorten mit ihren Farben und Positionen bestimmt werden. Dies ermöglicht es bevorzugt einem Aktorsystem, eine geeignete und genaue Reaktion durchzuführen, beispielsweise durch Erzeugung eines kontinuierlichen Signals und Speisung eines Steuersystems der Aktoreinrichtung.

Wenn eine Aktoreinrichtung nicht zum Einsatz kommt, kann die Erfindung auch genutzt werden, um die Anzahl der transportierten Behältersorten zu ermitteln.

Bei einer bevorzugten Ausführungsform weist die Vorrichtung daher eine Zähleinrichtung auf, welche dazu geeignet und bestimmt ist, die Anzahl bestimmter Behältergattungen innerhalb eines Bildabschnittes oder auch innerhalb einer bestimmten Transportstrecke zu ermitteln.

Daneben ist das hier beschriebene System sehr flexibel und kann jeder Art und Größe von Behältern sowie auch die jeweiligen Farbkombinationen finden, um dadurch die Behältnisvariante zu ermitteln.

Dies kann dabei erfolgen, ohne dass vorher ein weiteres Modell trainiert werden muss, um eine Variante zu finden.

Daneben kann die Erfindung auch für ein automatisiertes Labeln von Bilddaten verwendet werden. Die so gelabelten Bilder können anschließend für ein Training eines neuronalen Netzes verwendet werden, welches bevorzugt durch wiederholtes Training mit unterschiedlichen Bilddaten laufend an Qualität zunimmt.

Weitere Vorteile und Ausführungsformen ergeben sich aus den beigefügten Zeichnungen:
Darin zeigen:
- Fig. 1: eine schematische Darstellung zur Veranschaulichung des erfindungsgemäßen Verfahrens;
- Fig. 2: eine Darstellung zur Auswertung eines aufgenommenen Bildabschnitts; und
- Fig. 3: eine weitere Darstellung zur Auswertung eines aufgenommenen Bildabschnitts.

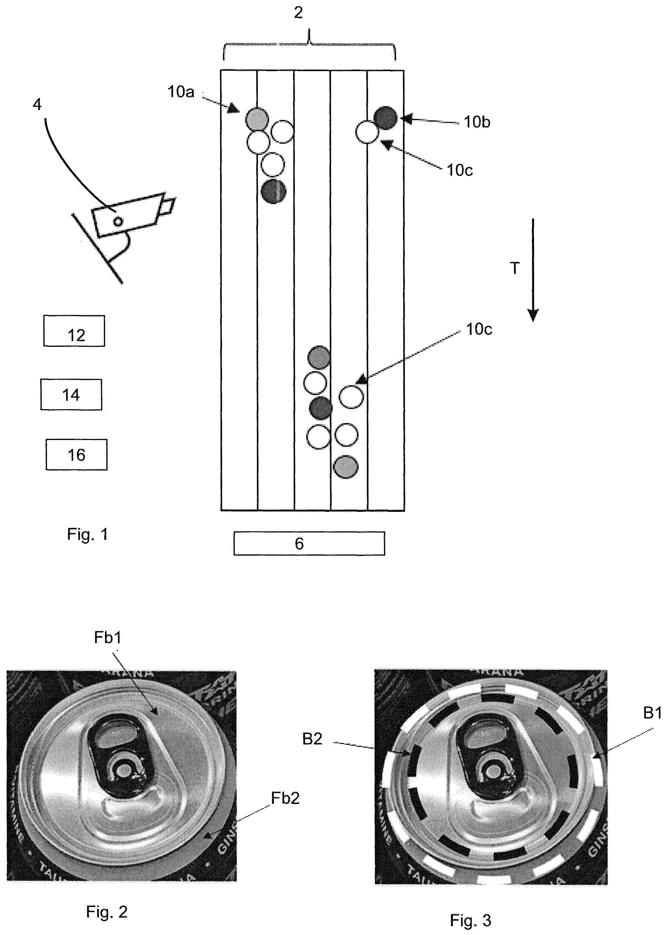

Fig. 1 zeigt eine schematische Darstellung einer erfindungsgemäßen Vorrichtung. Diese weist eine Transporteinrichtung 2 auf. Diese Transporteinrichtung 2 transportiert hier drei Gattungen von Behältnissen 10a, 10b, 10c entlang eines Transportpfads T. Dabei handelt es sich hier um Behältnisse dreier verschiedener Gattungen. Beispielsweise kann es sich um drei Gattungen an Behältnissen bzw. Getränken handeln, welche sich insbesondere durch die Farben der Behältnisse, von deren Verschlüssen, von deren Deckelbereichen oder dergleichen unterschieden.

Eine Bildaufnahmeeinrichtung 4, bei der es sich insbesondere um eine Kamera handelt nimmt Bilder und insbesondere Videos der von der Transporteinrichtung 2 transportierten Behältnisse 10a, 10b, 10c auf.

Man erkennt, dass die Behältnisse hier in Gruppen transportiert werden. Bevorzugt werden von der Bildaufnahmeeinrichtung 4 sämtliche der gezeigten Behältnisse 10a, 10b, 10c erfasst.

Das Bezugszeichen 12 kennzeichnet eine Bildauswerteeinrichtung bzw. Bildanalyseeinrichtung, welche die aufgenommenen Bilder (und/oder Videos) auswertet und/oder analysiert. Bevorzugt identifiziert dabei diese (Bild)analyseeinrichtung in den aufgenommenen Bildern die einzelnen Behältnisse 10a, 10b, 10c, jedoch bevorzugt noch unabhängig von ihrer Gattung.

Eine Bildabschnittsbildungseinrichtung 14 unterteilt bevorzugt ein oder mehrere aufgenommene Bilder, wobei für jede Bilde eines der Behältnisse bzw. einen Abschnitt desselben zeigt.

Eine Zuordnungseinrichtung ordnet bevorzugt jedem dieser Bildabschnitte und/oder jedem der identifizierten Behältnisse eine insbesondere eindeutige Identifikationsinformation zu.

Eine Farbauswerteeinrichtung 16 wertet bevorzugt die einzelnen Bildabschnitte farblich aus und gibt bevorzugt zu jedem Bildabschnitt (und damit zu jedem in diesem Bildabschnitt gezeigten Behältnis) wenigstens eine Farbinformation aus.

Zusätzlich können noch andere Werte ausgegeben werden, welche für dieses Behältnis charakteristisch sind, wie etwa eine Höhe, ein Querschnitt oder dergleichen.

Das Bezugszeichen 6 kennzeichnet eine Aktoreinrichtung und insbesondere eine Sortiereinrichtung wie etwa einen Roboter, welche bevorzugt unter Verwendung der Farbinformation für jedes einzelne Behältnis 10a, 10b, 10c gesteuert wird. Diese Aktoreinrichtung kann bevorzugt die einzelnen identifizierten Behältnisse sortieren.

Fig. 2 zeigt einen Bildabschnitt eines aufgenommenen Bildes. Dieser Bildabschnitt zeigt hier einen Deckelbereich einer Dose. Aus diesem Bildabschnitt können hier zwei Farbinformationen bzw. zwei Zielfarben und/oder entsprechende Farbbereiche Fb1 und Fb2 ermittelt werden, wobei eine Zielfarbe für einen Deckelbereich der Dose charakteristisch ist und eine Zielfarbe für einen Rand- oder Wandungsbereich.

Fig. 3 zeigt eine alternative Vorgehensweise der Erkennung. Diese Alternative besteht darin, dass aus der Objekterkennung der Mittelpunkt des Objektes, d.h. hier der Dose bekannt ist, und damit auch der Behältnisdurchmesser. Daher können viele Bereiche B1, B2 konstruiert werden und die dominante Farbe in jedem Bereich bestimmt werden. Dies ist durch die gestrichelten Linien angedeutet. Dabei kann für jeden Bereich eine dominante Farbe ermittelt werden. Es wäre auch möglich, dass diese Bereiche, hier die beiden Bereiche definiert werden, etwa mit Kreisen definiert werden. Andere Formen sind auch möglich, die Suche nach der Farbe findet bevorzugt nur innerhalb dieser beiden Bereiche statt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Sortieren und/oder Behandeln von Behältnissen (10a, 10b, 10c) mit den Schritten
- Aufnahme wenigstens eines Bildes und/oder eines Videos einer Vielzahl von Behältnissen (10a, 10b, 10c) mittels einer Bildaufnahmeeinrichtung (4) welche zur Aufnahme ortsaufgelöster Farbbilder geeignet und bestimmt ist
- Analyse des wenigstens einen aufgenommenen Bildes
- Identifizieren der einzelnen Behältnisse (10a, 10b, 10c);
- Zuordnung einer Identifikationsinformation sowie wenigstens eines Abschnitts des aufgenommenen Bildes zu jedem der identifizierten Behältnisse (10a, 10b, 10c); **gekennzeichnet durch** den Schritt
- Ermittlung einer Farbinformation, welche für ein identifiziertes Behältnis (10a, 10b, 10c) charakteristisch ist aus dem Abschnitt des aufgenommenen Bildes.

2. Verfahren nach Anspruch 1,
**dadurch gekennzeichnet, dass**
eine Aktoreinrichtung (6) und/oder Sortiereinrichtung, welche dazu geeignet und bestimmt ist auf das identifizierte Behältnis (10a, 10b, 10c) einzuwirken, unter Berücksichtigung der Farbinformation gesteuert wird.

3. Verfahren nach Anspruch 2,
**dadurch gekennzeichnet, dass**
die Aktoreinrichtung (6) aus einer Gruppe von Aktoreinrichtungen (6) ausgewählt ist, welche Roboter, Roboterarme, Stoßeinrichtungen zum Ausstoßen einzelner Behältnisse aus dem Transportpfad, Weichen zum Ausschleusen einzelner Behältnisse (10a, 10b, 10c) aus dem Transportpfad, oder dergleichen ausgewählt ist.

4. Verfahren nach wenigstens einem der vorangegangenen Ansprüche,
**dadurch gekennzeichnet, dass**
eine Transporteinrichtung (2) die Behältnisse (10a, 10b, 10c) entlang eines vorgegebenen Transportpfads transportiert und bevorzugt das wenigstens eine Bild oder Video der Behältnisse (10a, 10b, 10c) während des Transports der Behältnisse (10a, 10b, 10c) aufgenommen wird.

5. Verfahren nach wenigstens einem der vorangegangenen Ansprüche,
**dadurch gekennzeichnet, dass**
das wenigstens eine Bild mittels eines Bilderkennungs - Algorithmus analysiert wird und/oder das Identifizieren einzelner Behältnisse oder Behältnisbereiche mittels eines Algorithmus erfolgt und/oder die Ermittlung der Farbinformation mittels eines Algorithmus erfolgt.

6. Verfahren nach wenigstens einem der vorangegangenen Ansprüche,
**dadurch gekennzeichnet, dass**
das alle Behältnisse (10a, 10b, 10c) in einem aufgenommenen Bild identifiziert werden.

7. Verfahren nach wenigstens einem der vorangegangenen Ansprüche,
**dadurch gekennzeichnet, dass**
mittels der Identifikationsinformation ein Behältnis (10a, 10b, 10c) in Kamerakoordination gefunden wird und/oder die Identifiaktionsinformation an ein übergeordnetes Koordinatensystem übertragen wird.

8. Verfahren nach wenigstens einem der vorangegangenen Ansprüche,
**dadurch gekennzeichnet, dass**
jedem Behältnis oder Behältnistyp eine bestimmte Farbe oder Farbgruppe zugeordnet wird.

9. Verfahren nach wenigstens einem der vorangegangenen Ansprüche,
**dadurch gekennzeichnet, dass**
in dem Bildabschnitt wenigstens eine Farbe und bevorzugt eine Vielzahl von Farben aufgefunden wird und anhand von Anteilen der einzelnen Farben auf das Behältnis (10a, 10b, 10c) geschlossen wird.

10. Verfahren nach Anspruch 9,
**dadurch gekennzeichnet, dass**
das Auffinden der Farben unter Verwendung wenigstens eines Farbsystems erfolgt, wobei bevorzugt das Farbsystem aus einer Gruppe von Farbsystemen ausgewählt wird, welche HSV, L*A*B und YCbCr enthält.

11. Verfahren nach wenigstens einem der vorangegangenen Ansprüche,
**dadurch gekennzeichnet, dass**
die Analyse des wenigstens einen aufgenommenen Bildes, das Identifizieren der einzelnen Behältnisse (10a, 10b, 10c) und/oder die Ermittlung der Farbinformation unter Verwendung einer künstlichen Intelligenz erfolgt.

12. Verfahren nach wenigstens einem der vorangegangenen Ansprüche,
**dadurch gekennzeichnet, dass**
eine ermittelte Farbstruktur eines Bildabschnitts einem bestimmten Behältnis (10) oder eine bestimmten Behältnisgattung zugeordnet wird.

13. Vorrichtung zum Sortieren und/oder Identifizieren von Behältnissen (10a, 10b, 10c) wobei die Vorrichtung eine Transporteinrichtung (2) aufweist, welche die Behältnisse (10a, 10b, 10c) entlang eines vorgegebenen Transportpfads (T) transportiert und wobei die Vorrichtung (1) wenigstens eine Bildaufnahmeeinrichtung (4) zur Aufnahme wenigstens eines Bildes und/oder eines Videos einer Vielzahl von von der Transporteinrichtung (2) transportierten Behältnissen (10a, 10b, 10c) aufweist und wobei die Bildaufnahmeeinrichtung (4) zur Aufnahme ortsaufgelöster Farbbilder geeignet und bestimmt ist, wobei die Vorrichtung weiterhin eine Analyseeinrichtung (12) zur Analyse des aufgenommenen Bildes aufweist, welche dazu geeignet und bestimmt ist, ein einzelnes Behältnis (10a, 10b, 10c) innerhalb des aufgenommenen Bildes zu identifizieren, wobei die Vorrichtung (1) eine erste Zuordnungseinrichtung aufweist, welche dazu geeignet und bestimmt ist, einem Bildabschnitt des aufgenommenen Bildes, welcher bevorzugt das identifizierte Behältnis (10a, 10b, 10c) enthält, eine Identifikationsinformation zuzuordnen,
**dadurch gekennzeichnet, dass**
die Vorrichtung (1) eine Farbinformationsermittlungseinrichtung aufweist, welche dazu geeignet ist, eine für dieses Behältnis (10a, 10b, 10c) und/oder für diesen Bildabschnitt charakteristische Farbinformation zu ermitteln.

14. Vorrichtung nach Anspruch 13,
**dadurch gekennzeichnet, dass**
die Vorrichtung eine Aktoreinrichtung Einwirken auf die Behältnisse (10a, 10b, 10c) und insbesondere zum Sortieren der Behältnisse (10a, 10b, 10c) aufweist, wobei weiterhin eine Steuerungseinrichtung vorgesehen ist, welche diese Aktoreinrichtung in Abhängigkeit von der für das Behältnis (10a, 10b, 10c) charakteristischen Farbinformation steuert.

15. Vorrichtung (1) nach wenigstens einem der vorangegangenen Ansprüche,
**dadurch gekennzeichnet, dass**
die Vorrichtung eine zweite Zuordnungseinrichtung aufweist, welche der für den Bildabschnitt und/oder das Behältnis (10a, 10b, 10c) charakteristischen Farbinformation eine Behältnisgattung zuordnet.

## Claims

1. A method for sorting and/or treating containers (10a, 10b, 10c), comprising the steps of
- recording at least one image and/or a video of a plurality of containers (10a, 10b, 10c) by an image recording device (4), which is suitable and intended for recording spatially resolved color images;
- analyzing the at least one recorded image;
- identifying the individual containers (10a, 10b, 10c);
- assigning an identification information and at least one portion of the recorded image to each of the identified containers (10a, 10b, 10c); **characterized by** the step of
- determining a color information, which is characteristic of an identified container (10a, 10b, 10c), from the portion of the recorded image.

2. The method according to claim 1,
**characterized in that**
an actuator device (6) and/or sorting device, which is suitable and intended for acting on the identified container (10a, 10b, 10c), is controlled taking into account the color information.

3. The method according to claim 2,
**characterized in that**
the actuator device (6) is selected from a group of actuator devices (6), which contains robots, robot arms, impact devices for ejecting individual containers from the transport path, switches for discharging individual containers (10a, 10b, 10c) from the transport path, or the like.

4. The method according to at least one of the preceding claims, **characterized in that**
a transport device (2) transports the containers (10a, 10b, 10c) along a predetermined transport path, and, preferably, the at least one image or video of the containers (10a, 10b, 10c) is recorded during the transport of the containers (10a, 10b, 10c).

5. The method according to at least one of the preceding claims, **characterized in that**
the at least one image is analyzed by an image recognition algorithm, and/or the individual containers or container regions are identified by an algorithm, and/or the color information is determined by an algorithm.

6. The method according to at least one of the preceding claims, **characterized in that**
all containers (10a, 10b, 10c) in a recorded image are identified.

7. The method according to at least one of the preceding claims, **characterized in that**
a container (10a, 10b, 10c) in camera coordinates is found by the identification information, and/or the identification information is transferred to a superordinate coordinate system.

8. The method according to at least one of the preceding claims, **characterized in that**
a particular color or color group is assigned to each container or container type.

9. The method according to at least one of the preceding claims, **characterized in that**
at least one color, preferably a plurality of colors, is found in the image portion and the container (10a, 10b, 10c) is deduced on the basis of proportions of the individual colors.

10. The method according to claim 9,
**characterized in that**
the colors are found using at least one color system, wherein the color system is preferably selected from a group of color systems that contains HSV, L*A*B, and YCbCr.

11. The method according to at least one of the preceding claims, **characterized in that**
the analysis of the at least one recorded image, the identification of the individual containers (10a, 10b, 10c), and/or the determination of the color information takes place using an artificial intelligence.

12. The method according to at least one of the preceding claims, **characterized in that**
a determined color structure of an image portion is assigned to a particular container (10) or a particular container type.

13. An apparatus for sorting and/or identifying containers (10a, 10b, 10c), wherein the apparatus has a transport device (2), which transports the containers (10a, 10b, 10c) along a predetermined transport path (T), and wherein the apparatus (1) has at least one image recording device (4) for recording at least one image and/or a video of a plurality of containers (10a, 10b, 10c) transported by the transport device (2), and wherein the image recording device (4) is suitable and intended for recording spatially resolved color images, wherein the apparatus furthermore comprises an analysis device (12) for analyzing the recorded image, which analysis device is suitable and intended for identifying an individual container (10a, 10b, 10c), within the recorded image, wherein the apparatus (1) has a first assignment device, which is suitable and intended for assigning identification information to an image portion, containing the identified container (10a, 10b, 10c), of the recorded image, **characterized in that**
the apparatus (1) has a color information determination device, which is suitable for determining color information characteristic of this container (10a, 10b, 10c) and/or of this image portion.

14. The apparatus according to claim 13,
**characterized in that**
the apparatus has an actuator device for acting on the containers (10a, 10b, 10c), and in particular for sorting the containers (10a, 10b, 10c), wherein a control device is furthermore provided, which controls this actuator device as a function of the color information characteristic of the container (10a, 10b, 10c).

15. The apparatus (1) according to at least one of the preceding claims, **characterized in that**
the apparatus has a second assignment device, which assigns a container type to the color information characteristic of the image portion and/or the container (10a, 10b, 10c).

## Revendications

1. Procédé de tri et/ou de traitement de récipients (10a, 10b, 10c) avec les étapes
- d'enregistrement d'au moins une image et/ou d'une vidéo d'une pluralité de récipients (10a, 10b, 10c) au moyen d'un système d'enregistrement d'images (4), qui est adapté pour et se destine à enregistrer des images en couleur à résolution spatiale ;
- d'analyse de l'au moins une image enregistrée ;
- d'identification des récipients individuels (10a, 10b, 10c) ;
- d'association d'une information d'identification ainsi que d'au moins une section de l'image enregistrée à chacun des récipients (10a, 10b, 10c) identifiés ;
**caractérisé par** l'étape
- de détermination d'une information de couleur, qui est caractéristique d'un récipient (10a, 10b, 10c) identifié à partir de la section de l'image enregistrée.

2. Procédé selon la revendication 1,
**caractérisé en ce que**
un système d'actionnement (6) et/ou un système de tri, qui sont adaptés pour et se destinent à agir sur le récipient (10a, 10b, 10c) identifié, sont commandés en tenant compte de l'information de couleur.

3. Procédé selon la revendication 2,
**caractérisé en ce que**
le système d'actionnement (6) est choisi parmi un groupe de systèmes d'actionnement (6), qui sont des robots, des bras de robot, des systèmes de percussion pour éjecter des récipients individuels du trajet de transport, des aiguillages pour évacuer des récipients (10a, 10b, 10c) individuels du trajet de transport, ou similaires.

4. Procédé selon au moins l'une quelconque des revendications précédentes,
**caractérisé en ce que**
un système de transport (2) transporte les récipients (10a, 10b, 10c) le long d'un trajet de transport prédéfini et de manière préférée l'au moins une image ou vidéo des récipients (10a, 10b, 10c) est enregistrée pendant le transport des récipients (10a, 10b, 10c).

5. Procédé selon au moins l'une quelconque des revendications précédentes,
**caractérisé en ce que**
l'au moins une image est analysée au moyen d'un algorithme de reconnaissance d'image et/ou l'identification de récipients individuels ou de zones de récipient est effectuée au moyen d'un algorithme et/ou la détermination de l'information de couleur est effectuée au moyen d'un algorithme.

6. Procédé selon au moins l'une quelconque des revendications précédentes,
**caractérisé en ce que**
**que** tous les récipients (10a, 10b, 10c) sont identifiés dans une image enregistrée.

7. Procédé selon au moins l'une quelconque des revendications précédentes,
**caractérisé en ce que**
un récipient (10a, 10b, 10c) est trouvé en coordination avec la caméra au moyen de l'information d'identification et/ou l'information d'identification est transmise à un système de coordonnées de niveau supérieur.

8. Procédé selon au moins l'une quelconque des revendications précédentes,
**caractérisé en ce que**
une couleur donnée ou un groupe de couleurs donné est attribué(e) à chaque récipient ou type de récipient.

9. Procédé selon au moins l'une quelconque des revendications précédentes,
**caractérisé en ce que**
au moins une couleur et de manière préférée une pluralité de couleurs sont trouvées dans la section d'image et des proportions des couleurs individuelles permettent de déduire le récipient (10a, 10b, 10c).

10. Procédé selon la revendication 9,
**caractérisé en ce que**
la recherche des couleurs est effectuée en utilisant au moins un système de couleur, dans lequel le système de couleur est choisi de manière préférée parmi un groupe de systèmes de couleur contenant HSV, L*A*B et YCbCr.

11. Procédé selon au moins l'une quelconque des revendications précédentes,
**caractérisé en ce que**
l'analyse de l'au moins une image enregistrée, l'identification des récipients (10a, 10b, 10c) individuels et/ou la détermination de l'information de couleur sont effectuées en utilisant une intelligence artificielle.

12. Procédé selon au moins l'une quelconque des revendications précédentes,
**caractérisé en ce que**
une structure de couleur déterminée d'une section d'image est associée à un récipient (10) donné ou à un genre de récipient donné.

13. Dispositif de tri et/ou d'identification de récipients (10a, 10b, 10c), dans lequel le dispositif présente un système de transport (2), qui transporte les récipients (10a, 10b, 10c) le long d'un trajet de transport (T) prédéfini et dans lequel le dispositif (1) présente au moins un système d'enregistrement d'images (4) pour enregistrer au moins une image et/ou une vidéo d'une pluralité de récipients (10a, 10b, 10c) transportés par le système de transport (2) et dans lequel le système d'enregistrement d'images (4) est adapté pour et se destine à enregistrer des images en couleur à résolution spatiale, dans lequel le dispositif présente par ailleurs un système d'analyse (12) pour l'analyse de l'image enregistrée, qui est adapté pour et se destine à enregistrer un récipient (10a, 10b, 10c) individuel à l'intérieur de l'image enregistrée, dans lequel le dispositif (1) présente un premier système d'association, qui est adapté pour et se destine à associer à une section d'image de l'image enregistrée, qui contient de manière préférée le récipient (10a, 10b, 10c) identifié, une information d'identification,
**caractérisé en ce que**
le dispositif (1) présente un système de détermination d'information de couleur, qui se destine à déterminer une information de couleur caractéristique dudit récipient (10a, 10b, 10c) et/ou de ladite section d'image.

14. Dispositif selon la revendication 13,
**caractérisé en ce que**
le dispositif présente un système d'actionnement destiné à agir sur les récipients (10a, 10b, 10c) et en particulier à trier les récipients (10a, 10b), 10c), dans lequel un système de commande est par ailleurs prévu, lequel commande ledit système d'actionnement en fonction de l'information de couleur caractéristique du récipient (10a, 10b, 10c).

15. Dispositif (1) selon au moins l'une quelconque des revendications précédentes,
**caractérisé en ce que**
le dispositif présente un deuxième système d'association, qui associe un genre de récipient à l'information de couleur caractéristique de la section d'image et/ou du récipient (10a, 10b, 10c).
